# EUROPÄISCHE PATENTSCHRIFT

(11) **EP 4 263 888 B1**
(45) Veröffentlichungstag und Bekanntmachung des Hinweises auf die Patenterteilung: **05.03.2025**
(21) Anmeldenummer: 21840681.7
(22) Anmeldetag: 17.12.2021
(51) Int. Cl.: C22B 7/02, F23J 15/02, F23G 5/44, F23G 5/08, F23L 7/00, F23G 5/24

(54) **VORRICHTUNG ZUM AUFARBEITEN VON CHEMISCH BELASTETEN FESTSTOFFPARTIKELN**
APPARATUS FOR PROCESSING CHEMICALLY EXPOSED PARTICULATE SOLIDS
DISPOSITIF DE TRAITEMENT DE PARTICULES SOLIDES CHIMIQUEMENT CHARGÉES

(30) Priorität: 18.12.2020 AT 2772020
(43) Veröffentlichungstag der Anmeldung: 25.10.2023
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2021/061918
(87) Internationale Veröffentlichungsnummer: WO 2022/130316

(56) Entgegenhaltungen:
- WO-A1-2005/094153
- WO-A2-2007/068025
- AT-A1- 504 073

## Beschreibung

Die vorliegende Erfindung betrifft eine Vorrichtung zum Aufarbeiten von chemisch belasteten Feststoffpartikeln, wie Verbrennungsstäuben, Schleifstäuben, Stahlwerksstäuben, Klärschlamm, Tiermehl, Shredder-Leichtfraktion, Batterieschrott und dergleichen, wobei die Vorrichtung ein Gehäuse und in dem Gehäuse einen mit Feuerfestmaterial ausgekleideten Brennraum aufweist, wobei an einem ersten axialen Ende des Gehäuses eine axiale Eintrittsöffnung in das Gehäuse vorgesehen ist, mit der eine einen Speicherraum für die Feststoffpartikel aufweisende Aufgabevorrichtung mit einer Abgabeöffnung für die Feststoffpartikel verbunden ist, wobei eine Lanze zum Einstoßen von Gasen und/oder Aerosolen in den Brennraum die Eintrittsöffnung axial durchsetzt und axial in den Brennraum eintaucht, wobei die Lanze durch eine Ummantelung vom Speicherraum abgetrennt ist und wobei sich die Ummantelung in den Brennraum und über den in den Brennraum eintauchenden Bereich der Lanze erstreckt.

Vorrichtungen der eingangs genannten Art sind beispielsweise aus AT 504 073 A1 sowie aus WO 2007/068025 A bekannt geworden.

Chemisch belastete Feststoffpartikel wie Stäube, Trockenschlämme und Schlämme aus der chemischen Industrie, der Metallurgie, der Landwirtschaft, der kommunalen und industriellen Entsorgungswirtschaft etc. und insbesondere Verbrennungsstäube, Schleifstäube, Stahlwerksstäube, Klärschlamm, Tiermehl, Shredder-Leichtfraktion, Batterieschrott und dergleichen, stellen aufgrund des hohen anorganischen und organischen Schadstoffgehalts sowie der großen spezifischen Oberfläche und des hohen chemischen Reaktionspotentials mit der Umwelt ein großes umweltrelevantes Problem dar. Die Aufarbeitung der kleinen Feststoffpartikel ist Gegenstand verschiedenster Technologien, jedoch ist die auch wirtschaftlich vertretbare Entsorgung der Schadstoffe und insbesondere die wertschöpfende Rückgewinnung der Wertstoffe aus den Feststoffpartikeln noch nicht befriedigend gelöst. So ist die Entsorgung der Schadstoffe sehr aufwendig und daher teuer, während das große Wertschöpfungspotential in Form von Elementen und Verbindungen wie beispielsweise P, Li, K, Zn, Fe, Pb, Cd, Cu, Ni, CO, H₂ und nicht zuletzt Exergie bei der Entsorgung zumeist verloren geht. Die Deponierung derartiger Stäube beziehungsweise Feststoffpartikel stellt ein hohes Umweltrisiko dar und es werden auf diese Weise dem Materialkreislauf wertvolle Elemente entzogen. Der Abbau und die Verarbeitung ohne ein zufriedenstellendes Konzept der Entsorgung, Aufarbeitung und Rückgewinnung führen insgesamt zu einer massiven Umweltbelastung, sozialen Belastungen und zu bedeutsamen Kohlendioxid-Emissionen.

Chemisch belastete Staubfraktionen beziehungsweise Feststoffpartikel stellen bei der thermischen Aufarbeitung durch Verbrennen in Injektorbrennern, wie dies im Stand der Technik bekannt ist, große Herausforderungen an die Prozessführung, da es in den ansonsten hochleistenden Injektorbrennern, die im Stand der Technik geläufig sind, nicht zu einer ausreichend feinen Zerstäubung der Feststoffpartikel kommt, um zum einen eine ausreichend große spezifische Oberfläche für das Ablaufen der gewünschten Umwandlungsreaktionen zur Verfügung zu stellen und zum anderen eine ausreichend lange Verweilzeit im Bereich des Injektors beziehungsweise der Lanze und in weiterer Folge in der Flamme des Injektorbrenners zu gewährleisten, die für eine vollständige Verbrennung von organischen Schadstoffen notwendig ist. Weiters sind die relevanten Feststoffpartikel aufgrund der chemischen Belastung insbesondere bei einem wünschenswert hohen Grad der Zerstäubung zu einem nicht unerheblichen Ausmaß explosionsgefährlich, was deren Verarbeitung in herkömmlichen Brennern höchst problematisch macht. Ein weiteres großes Problem bei der Aufarbeitung von chemisch belasteten Feststoffpartikeln, wie Stäuben und Trockenschlämmen und dergleichen, liegt darin, dass sowohl die Stäube beziehungsweise Feststoffpartikel als auch deren Verbrennungsprodukte und Verbrennungszwischenprodukte mitunter sehr abrasiv und vor allem korrosiv sind, was die Lebensdauer der in Injektorbrennern notwendigen Feuerfestmaterialien zur Auskleidung der Brennkammer massiv herabsetzt und bisweilen eine kontinuierliche Aufarbeitung der Feststoffpartikel verunmöglicht.

Der vorliegenden Erfindung liegt daher die Aufgabe zugrunde, eine Vorrichtung zum Aufarbeiten von chemisch belasteten Feststoffpartikeln, wie Verbrennungsstäuben, Schleifstäuben, Stahlwerksstäuben, Klärschlamm, Tiermehl, Shredder-Leichtfraktion, Batterieschrott und dergleichen sowie ein entsprechendes Verfahren anzugeben, wobei die vorgenannten Nachteile vermieden werden.

Zur Lösung dieser Aufgabe ist eine erfindungsgemäße Vorrichtung der eingangs genannten Art erfindungsgemäß dadurch gekennzeichnet, dass die Ummantelung im Brennraum eine Erweiterung ihres Durchmessers aufweist, bevorzugt auf zumindest den Durchmesser der Abgabeöffnung. Bei der vorliegenden Erfindung ist die Lanze durch den Speicherraum der Aufgabevorrichtung geführt und mündet entlang einer Längsachse des Gehäuses, welches abgesehen von diversen Anbauten eine im Wesentlichen rotationssymmetrische Konfiguration hat, entlang der Längsachse in den Brennraum. Hierbei ist die Lanze jedoch durch die Ummantelung von den Feststoffpartikeln in der Aufgabevorrichtung abgetrennt und dadurch, dass sich erfindungsgemäß die Ummantelung in den Brennraum und über den in den Brennraum eintauchenden Bereich der Lanze erstreckt, können die Feststoffpartikel auch nicht auf direktem Weg zur Lanze gelangen. Erst durch die Wirkung der durch die Lanze eingestoßenen Gase und/oder Aerosole, die im Bereich der von der Ummantelung umgebenen Lanze als starke Unterdruckwirbel zu beobachten ist, werden die Edukte, das heißt die Feststoffpartikel, insbesondere Verbrennungsstäube, Schleifstäube, Stahlwerksstäube, Klärschlamm, Tiermehl, Shredder-Leichtfraktion, Batterieschrott und dergleichen, um die Ummantelung herum gesaugt und im Unterdruckbereich stark verwirbelt. Dadurch kommt es, wenn nötig, zu einer Resttrocknung der Feststoffpartikel und zu einer höchst effektiven Vergrößerung der spezifischen Oberfläche.

Gleichzeitig werden die Feststoffpartikel in der an die Lanze anschließenden Flamme zentriert, sodass die Verbrennungsprodukte und Verbrennungszwischenprodukte nicht oder nur in sehr geringem Ausmaß mit der Feuerfestauskleidung in Kontakt geraten. Mit der erfindungsgemäßen Vorrichtung gelingt daher eine effiziente verbrennungschemische Umsetzung der fraglichen Feststoffpartikel unter Schonung der Feuerfestauskleidung des Brennraums und unter erheblicher Verringerung des Risikos einer Explosion der Feststoffpartikel und deren Stäube.

Erfindungsgemäß weist die Ummantelung im Brennraum eine Erweiterung ihres Durchmessers auf, bevorzugt auf zumindest den Durchmesser der Abgabeöffnung. Hierdurch kann die Abgabeöffnung weiter von der Verbrennungszone unterhalb der Lanze abgeschirmt werden, und gleichzeitig wird der Weg der Feststoffpartikel von der Abgabevorrichtung zur Verbrennungszone verlängert, was beides zu einer Verringerung des Explosionsrisikos führt. Darüber hinaus kann eine Erweiterung der Lanze im Brennraum zu einer strömungsgünstigen Ausführungsform der vorliegenden Erfindung führen, da unter gewissen Umständen die Unterdruckwirbelzone im Bereich der Mündung der Lanze vergrößert und optimiert wird.

In diesem Zusammenhang ist es gemäß einer bevorzugten Ausführungsform der vorliegenden Erfindung vorgesehen, dass die Erweiterung der Ummantelung eine gekrümmte rotationssymmetrische Form aufweist, insbesondere die Form einer sinusartigen Rotationsfläche. Die Ausführung der Erweiterung der Ummantelung in Form einer sinusartigen Rotationsfläche bedeutet im Zusammenhang mit der vorliegenden Erfindung, dass die Erweiterung eine grundsätzlich glockenartige Form hat, wobei die Glockenform am unteren Ende der Erweiterung, das heißt am brennraumseitigen Ende der Erweiterung, vollständig offen sein kann oder bereits wieder zusammenlaufen kann. Abhängig von der Geometrie der Erweiterung stellen sich unterschiedliche wünschenswerte Unterdruckverhältnisse und Verwirbelungen im Bereich zwischen der Erweiterung und der Lanze ein, sodass eine effektive Zerstäubung und eine ausreichende Verweilzeit in der Flamme im Brennraum erzielt werden. Die Effizienz der Zerstäubung und die daraus resultierende Verweilzeit in der Flamme kann bevorzugt durch ein durch das Lumen der Lanze gerichtetes, optisches Pyrometer gemessen und die Vorrichtung entsprechend geregelt werden, um eine möglichst optimale Verbrennung sicherzustellen. In diesem Zusammenhang ist es beispielsweise vorgesehen, dass durch die Ummantelung Wasser eingespritzt wird, um die Flamme zu regulieren.

Um auch bei langen Betriebszeiten der erfindungsgemäßen Vorrichtung eine Überhitzung der Erweiterung zu verhindern, ist die erfindungsgemäße Vorrichtung bevorzugt dahingehend weitergebildet, dass die Ummantelung zumindest in dem Bereich der Erweiterung von einem mit Kühlmittel durchströmten metallischen Rohr gebildet ist, das in Form von aneinander anliegenden Spiralgängen zu der Erweiterung gewickelt ist, wobei bevorzugt die Bereiche zwischen den Spiralgängen mit dem Metall, aus dem das Rohr besteht, verfüllt und geglättet sind. Dies bedeutet, dass die Erweiterung von aneinander anliegenden Schlingen eines Rohrs geformt wird, die dergestalt gewendelt und entsprechend der gewünschten Form der Erweiterung aneinander anliegen und in aller Regel miteinander verlötet oder anderweitig miteinander stofflich verbunden sind. Das bevorzugte Verfüllen und Glätten der Bereiche zwischen den Spiralgängen des Rohrs dient zur Vermeidung von Verschmutzungen und Anbackungen insbesondere an der Außenseite der aus dem Rohr geformten Erweiterung, an der entlang, wie oben erwähnt, die Feststoffpartikel aus dem Speicherraum der Aufgabevorrichtung zur Lanze nach unten gleiten beziehungsweise mit der die Feststoffpartikel bei der durch den Unterdruck herbeigeführten Verwirbelung im Brennraum in Berührung kommen. Das Kühlmittel ist in aller Regel Wasser, es kommen jedoch auch Luft, Sauerstoff und/oder ionische Flüssigkeiten in Frage. Die vom Kühlmittel aufgenommene Wärme kann vorteilhaft zur Sauerstoff- oder Lufterwärmung dienen, um dem Verbrennungsprozess im Injektorbrenner vorgewärmten Sauerstoff oder vorgewärmte Luft zuführen zu können.

Zu demselben Zweck kann das Rohr einen rechteckigen Querschnitt, bevorzugt quadratischen Querschnitt aufweisen, wie dies einer bevorzugten Ausführungsform der vorliegenden Erfindung entspricht. Dies ermöglicht es, die Schlingen des Rohrs weitgehend ohne die Ausbildung von Vertiefungen zwischen den Schlingen aneinander zu legen und miteinander zu verbinden. Dies hat weiters den Vorteil, dass gegebenenfalls weniger Material zum Verfüllen von Bereichen zwischen den Spiralgängen notwendig ist und das Kühlmittel an der gesamten Oberfläche der Erweiterung mehr oder weniger direkt unter der Oberfläche vorzufinden ist und daher ein bessere Kühlleistung erzielt wird. Das Kühlmittel ist in aller Regel Wasser, es kommen jedoch auch Luft, Sauerstoff und/oder ionische Flüssigkeiten in Frage. Die vom Kühlmittel aufgenommene Wärme kann vorteilhaft zur Sauerstoff- oder Lufterwärmung dienen, um dem Verbrennungsprozess im Injektorbrenner vorgewärmten Sauerstoff oder vorgewärmte Luft zuführen zu können.

Da die Ausbildung eines Bereichs mit einem starken Unterdruck und starken Verwirbelungen für die vorliegende Erfindung von eminenter Bedeutung ist, verdient die Ausführung der Lanze besondere Beachtung. Mit Vorteil ist es daher vorgesehen, dass die Lanze unter Ausbildung einer konvergenten Düse oder einer Lavaldüse in den Brennraum mündet, wie dies einer bevorzugten Ausführungsform der vorliegenden Erfindung entspricht. Je nach Anwendungsfall und je nachdem, mit welchem Druck beziehungsweise mit welchem Massenstrom der Gasstrom durch die Lanze in den Brennraum eingestoßen wird, kann eine konvergente Düse zur Erhöhung der Gasgeschwindigkeit oder eine Lavaldüse zur Vergleichmäßigung beziehungsweise axialen Ausrichtung des Gasstroms eingesetzt werden.

Um die Strömungsverhältnisse und insbesondere Druckgradienten sowie das Ausmaß der Turbulenz zwischen der Erweiterung und der Lanze nach den jeweiligen, von der Natur der aufzuarbeitenden Feststoffpartikel abhängigen Anforderungen weiter regulieren zu können, kann es gemäß einer bevorzugten Ausführungsform der vorliegenden Erfindung vorgesehen sein, dass die Ummantelung in axialer Richtung gegenüber der Lanze verschiebbar ist und/oder dass die Lanze in axialer Richtung gegenüber der Ummantelung verschiebbar ist. Auf diese Weise können Lanze und Ummantelung gegeneinander verschoben werden, wodurch sich die Strömungsverhältnisse in dem genannten Bereich ändern und entsprechend einstellen lassen.

Eine weitere Erhöhung der Sicherheit des Betriebs der erfindungsgemäßen Vorrichtung wird dadurch erreicht, dass sich ausgehend von der Eintrittsöffnung ein Anschlussrohr für die Aufgabevorrichtung unter Ausbildung eines Ringraums zwischen dem Anschlussrohr und der Ummantelung über die Abgabeöffnung hinaus in den Speicherraum der Aufgabevorrichtung erstreckt, wie dies einer bevorzugten Ausführungsform der vorliegenden Erfindung entspricht. Durch diese einfache konstruktive Maßnahme gelangt weniger Material, das sich entzünden oder explodieren könnte, in den Bereich des Brennraums, wobei durch entsprechende Dimensionierung der den Ringspalt ausbildenden Teile der erfindungsgemäßen Vorrichtung dafür Sorge getragen werden kann, dass gerade jene Menge an Feststoffpartikeln vom Speicherraum der Aufgabevorrichtung durch den Ringspalt in den Brennraum gelangt, die im Brennraum in einer gegebenen Zeitspanne auch umgesetzt werden kann.

Um eine noch bessere Verwirbelung der Feststoffpartikel zu erzielen, ist die Erfindung bevorzugt dadurch gekennzeichnet, dass das Anschlussrohr im Brennraum zur Ausbildung eines Registers erweitert ist und dass ausgehend vom Register Verteilrohre für Feststoffpartikel an der Ummantelung entlang bis zum brennraumseitigen Ende der Ummantelung verlaufen, wobei bevorzugt die Verteilrohre so an der Ummantelung angeordnet sind, dass vom Speicherraum der Aufgabevorrichtung durch den Ringspalt in den Brennraum gelangende Feststoffpartikeln mit Drall in den Brennraum eintreten.

Bevorzugt sind die Verteilrohre und die Ummantelung, bevorzugt stofflich, miteinander verbunden und bilden die Innenseite der Ummantelung aus. In diesem Fall wird die Ummantelung von den Verteilrohren und zwischen den Verteilrohren angeordneten Blechen gebildet. Es kann vorteilhaft sein, in der Lanze entsprechende Einbauten vorzusehen, um den zentralen Sauerstoffstrahl im Gegendrall Strom der Festkörperpartikel auszustoßen, wie dies einer bevorzugten Ausführungsform der vorliegenden Erfindung entspricht. Hierdurch werden wesentlich weniger korrosive Schmelzetröpfchen an die feuerfeste Wandung der Brennkammer geschleudert. Dadurch wird die Feuerfestzustellung der Brennkammer signifikant geschont, da weniger chemischer Verschleiß in Form von Korrosion und/oder Erosion auftritt. Die Flamme in der Brennkammer brennt dadurch weiters sehr ruhig und entwickelt sich in die Zentralachse der Brennkammer.

Wenn wie soeben beschrieben die Verteilrohre die Innenseite der Ummantelung ausbilden, kann es sinnvoll sein, dass die Verteilrohre zumindest in einem Teilbereich mit zur Lanze gerichteten Schlitzen und/oder Löchern versehen ist, wie dies einer bevorzugten Ausführungsform der vorliegenden Erfindung entspricht. In diesem Fall können die Feststoffpartikel durch die Schlitze und/oder Löcher zur Lanze hingesogen werden, wobei eine optimale Verwirbelung entsteht.

Um den Zustrom von Feststoffpartikeln in den Ringraum zwischen dem Anschlussrohr und der Ummantelung regulieren zu können, kann es in bevorzugter Weise vorgesehen sein, dass im Speicherraum ein, bevorzugt in axialer Richtung verschiebbares, weiteres Rohr beabstandet vom Anschlussrohr an das Anschlussrohr anschließt. Das weitere Rohr bildet auf diese Weise zusammen mit dem Anschlussrohr einen Ringspalt aus, durch den die Feststoffpartikel in den Ringraum zwischen dem Anschlussrohr und der Ummantelung gelangen und in weiterer Folge durch die Schwerkraft und durch den bereits in den Ringraum zwischen dem Anschlussrohr und der Ummantelung wirkenden Sog des von der Lanze in den Brennraum eingestoßenen Gasstroms in den Brennraum befördert werden, wobei es im Ringraum zu einer Zerscherung und bereits zu einer Verwirbelung der Feststoffpartikel kommt. Wenn gemäß der bevorzugten Ausführungsform das weitere Rohr axial verschiebbar ist, kann die Breite des Ringspalts eingestellt und der Zustrom in den Ringraum geregelt werden.

Eine andere Art der Regelung des Zustromes in den Ringraum kann gemäß einer bevorzugten Ausführungsform der vorliegenden Erfindung dadurch bewerkstelligt werden, dass das Anschlussrohr im Speicherraum axial verschlossen ist und eine radial mündende und einstellbar öffenbare Zuleitung zum Anschlussrohr in das Anschlussrohr mündet.

Gemäß einer bevorzugten Ausführungsform der vorliegenden Erfindung ist in einer axialen Ebene der Aufgabevorrichtung ein den Speicherraum nach unten begrenzender Boden angeordnet, der von unten von einem Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, durchströmbar ist. Ein solcher Boden weist daher in aller Regel eine Vielzahl von Bohrungen oder Schlitzen auf. sodass ein Fluidisierungsmedium von unten in den Speicherraum geblasen werden kann, um die Feststoffpartikel zu fluidisieren. Im Zusammenhang mit der vorliegenden Erfindung bedeutet "Fluidisierungsmedium" ein gasförmiges Fluid, das mit solcher kinetischer Energie in die im Speicherraum vorgehaltenen Feststoffpartikel gefördert wird, dass in der Aufgabevorrichtung eine Wirbelschicht der aufzuarbeitenden Feststoffpartikel vorliegt, sodass die Feststoffpartikel im Fluidisierungsmedium suspendiert sind und damit bereits verwirbelt in den Ringraum zwischen dem Anschlussrohr und der Ummantelung gefördert werden. Falls nötig, beispielsweise bei der Aufarbeitung von Schlämmen, bei denen Feststoffpartikel in flüssigen Phasen suspendiert sind, kann das Fluidisierungsmedium auch zum Trocknen oder bei Trockenschlämmen zum Nachtrocknen dienen, wofür das Fluidisierungsmedium bevorzugt mit erhöhter Temperatur durch den Boden gefördert wird. Das Fluidisierungsmedium kann hierbei auch bereits für die Einstellung von der Verbrennung in der Brennkammer förderliche chemische und verbrennungsstöchiometrische Parameter optimiert sein, wenn, wie dies bevorzugt vorgesehen ist, nicht nur Luft, sondern je nach Bedarf auch Sauerstoff, Wasserdampf, CO₂, H₂/CO, Cl₂, NH₃, Phosgen, gasförmige Kohlenwasserstoffe und/oder N₂ als Fluidisierungsmedium eingesetzt werden.

Zu demselben Zweck kann in den Speicherraum zumindest eine Anschlussleitung für ein Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, und/oder gasförmige, flüssige und/oder feststoffliche Additive, insbesondere Cl₂, COCl₂, PVC, NaCl, CaCl₂, H₂O münden, wie dies einer bevorzugten Ausführungsform der vorliegenden Erfindung entspricht.

Zur weiteren Verminderung des Risikos einer Explosion der chemisch belasteten und zumeist staubförmigen Feststoffpartikel in der Aufgabevorrichtung und im Ringraum zwischen dem Anschlussrohr und der Ummantelung ist die vorliegende Erfindung bevorzugt dahingehend weitergebildet, dass im Brennraum in einer der Ummantelung nachgeordneten Ebene zur Ausbildung einer Brennraumvorkammer eine Trennplatte mit einem mit der Ummantelung konzentrischen Loch angeordnet ist, wobei das Loch einen geringeren Durchmesser aufweist, als der Durchmesser des brennraumseitigen, offenen Endes der Ummantelung, wobei bevorzugt die Trennplatte in axialer Richtung verschiebbar ist. Die Trennplatte ist hierbei von der Erweiterung beabstandet und bildet zusammen mit der Erweiterung einen Ringspalt aus, durch den die Feststoffpartikel durch die Wirkung des vom in den Brennraum eingestoßenen Gasstrom herrührenden Unterdrucks gesaugt werden, um zur im Bereich der Lanze entspringenden Flamme gesaugt und in der Flamme zentriert zu werden. Die Breite des Ringspalts hängt hierbei von den Dimensionen der Erweiterung und dem Loch in der Trennplatte ab, sowie von der relativen axialen Position der Trennplatte in Bezug auf die Erweiterung, wobei in einer bevorzugten Ausführungsform die Breite des Ringspalts dadurch einstellbar ist, dass die Trennplatte in axialer Richtung verschiebbar ist. Wenn sowohl Trennplatte als auch Erweiterung nach unten verschoben werden, wird die Vorkammer vergrößert und die Verbrennungszone wandert weiter von der Aufgabevorrichtung weg, sodass wiederum die Explosionsgefahr der Stäube in der Aufgabevorrichtung vermindert wird.

Zu demselben Zweck, jedoch mit einem verstärkten Fokus auf die optimierte Einstellung der Strömungsverhältnisse der Feststoffpartikel auf dem Weg von der Aufgabevorrichtung zu der Lanze kann es gemäß einer bevorzugten Ausführungsform der vorliegenden Erfindung vorgesehen sein, dass im Brennraum in einer der Ummantelung nachgeordneten Ebene zur Ausbildung einer Brennraumvorkammer ein Leitkörper, bevorzugt ein in axialer Richtung verschiebbarer Leitkörper, angeordnet ist, der in der Richtung von der Eintrittsöffnung zum Brennraum einen nach radial innen gerichteten, bevorzugt gekrümmten, rotationssymmetrischen Verlauf aufweist. Ein solcher Leitkörper ist somit ein rotationssymmetrischer Ring mit einer vom äußeren Rand zu einem Loch in der Mitte abnehmenden Dicke.

Die spezifische Ausformung erfolgt dergestalt, dass eine möglichst optimierte Verwirbelung der Feststoffpartikel und Führung der Feststoffpartikel zu der an der Lanze entstehenden Flamme erfolgt.

Aufgrund der bei der Verbrennung der Feststoffpartikel auftretenden hohen Temperaturen in der Brennkammer und mit der Aufgabe, das Aufarbeiten der Feststoffpartikel mit der erfindungsgemäßen Vorrichtung kontinuierlich und über viele Stunden und sogar Tage konstant zu betreiben, kann es notwendig sein, besondere Vorkehrungen zur Kühlung empfindlicher Einbauten in der Brennkammer vorzunehmen. Die vorliegende Erfindung ist daher gemäß einer bevorzugten Ausführungsform der vorliegenden Erfindung dahingehend weitergebildet, dass die Trennplatte oder der Leitkörper eine Innenkühlung aufweisen. Die Innenkühlung ist bevorzugt als ein System von Leitungen oder Hohlräumen in der Trennplatte beziehungsweise dem Leitkörper ausgebildet, in der beziehungsweise dem ein Kühlmittel wie beispielsweise Wasser strömt.

Gemäß einer bevorzugten Ausführungsform der vorliegenden Erfindung bildet das Gehäuse einen Abzugsraum für Reaktionsprodukte aus, der bevorzugt als den Brennraum außen umgebender, ringraumförmiger Kamin ausgebildet ist. Gemäß dieser bevorzugten Ausführungsform der vorliegenden Erfindung bildet das Gehäuse um den oberen Gehäuseteil, der die Eintrittsöffnung und gegebenenfalls die Trennplatte beziehungsweise den Leitkörper enthält, in einem unteren Bereich eine Erweiterung aus, deren Wand außen um den oberen Gehäuseteil geführt ist, sodass ein Ringraum entsteht, der an einem oberen Ende abgeschlossen ist. In diesen Ringraum steigen gasförmige Reaktionsprodukte und in der Gasströmung suspendierte feststoffliche Reaktionsprodukte auf und können dort abgezogen werden.

Das Abziehen der gasförmigen Reaktionsprodukte und der in der Gasströmung suspendierten feststofflichen Reaktionsprodukte sowie das Abtrennen der gasförmigen Reaktionsprodukte von den in der Gasströmung suspendierten feststofflichen Reaktionsprodukten kann auf jede erdenkliche Art erfolgen, es ist jedoch bevorzugt, dass der Abzugsraum über zumindest eine Abzugsleitung mit einem Zyklonabscheider verbunden ist. In dem Zyklonabscheider werden die genannten Produkte voneinander getrennt und können in der Folge geeignet weiterbehandelt werden.

Bevorzugt kann die Abzugsleitung eine gasdynamische Drossel, insbesondere ein Teslaventil, aufweisen, wie dies einer bevorzugten Ausführungsform der vorliegenden Erfindung entspricht. Dies gestattet es, im Brennraum geeignete Druckverhältnisse aufzubauen, wobei die Verwendung eines gasdynamischen Ventils im Gegensatz zu herkömmlichen mechanischen Ventilen als vorteilhaft hinsichtlich der Vermeidung von Anbackungen und in der Folge Verstopfungen des Ventils zu betrachten ist.

Um schmelzflüssige Reaktionsprodukte am Boden des Gehäuses zu sammeln, ist die erfindungsgemäße Vorrichtung bevorzugt dahingehend weitergebildet, dass an einem zweiten axialen Ende des Gehäuses ein Sumpf sowie eine Abstichvorrichtung für schmelzflüssige Reaktionsprodukte angeordnet sind, wobei bevorzugt das Gehäuse im Bereich der Abstichvorrichtung elektrisch beheizbar ist. Das zweite Ende des Gehäuses ist somit der Boden des Gehäuses und schließt das Gehäuse nach unten ab. In dem Sumpf sammeln sich die schmelzflüssigen Reaktionsprodukte, beispielsweise Metallschmelzen und Phosphatschlackenschmelze. Die genannten Schmelzen können von dort abgestochen werden und einer weiteren Aufarbeitung zugeführt werden. Dadurch, dass bevorzugt das Gehäuse im Bereich der Abstichvorrichtung elektrisch beheizbar sein kann, kann die Abstichvorrichtung auch bei geringem Schmelzedurchfluss durch Beheizen vor dem Zufrieren bewahrt werden oder es ist möglich, bei geringem Schmelzedurchfluss die Abstichvorrichtung zufrieren zu lassen, um die Schmelze batchweise abzustechen. Dies kann gemäß dieser bevorzugten Ausführungsform wiederum durch Beheizen des Gehäusebereichs nahe der Abstichvorrichtung erfolgen.

Die Phosphatschlackenschmelze kann insbesondere auf einem schmelzflüssigen Zinnbad rasch abgekühlt werden, um die Phosphatschlackenschmelze zu verglasen, sodass die derart verglaste Schlacke vermahlen und als in hohem Maße hydraulischer Zuschlagstoff in der Zementindustrie Verwendung finden kann. Ein derartiges Verfahren zum Verglasen von Schlackenschmelze und insbesondere Phosphatschlackenschmelze ist in der internationalen Anmeldung WO 2020/124105 A1 der Anmelderin offenbart und beschrieben. Die durch das erfindungsgemäße Verfahren geläuterte, schadstofffreie Phosphatschlackenschmelze kann nach Kühlung beispielsweise aber auch als Thomasmehl (Dünger) eingesetzt werden.

Das erfindungsgemäße Verfahren zum Aufarbeiten von chemisch belasteten Feststoffpartikeln, wie Verbrennungsstäuben, Schleifstäuben, Stahlwerksstäuben, Klärschlamm, Tiermehl, Shredder-Leichtfraktion, Batterieschrott und dergleichen, zeichnet sich durch die Verwendung der erfindungsgemäßen Vorrichtung aus und bietet daher, wie oben beschrieben, erhebliche Vorteile hinsichtlich der Verweilzeit der Feststoffpartikel in der Flamme, der Verminderung des Explosionsrisikos der staubförmigen Feststoffpartikel im Bereich des Injektorbrenners sowie der Schonung der Feuerfestauskleidung im Brennraum.

Bevorzugt besteht der Gasstrom aus einem sauerstoffhaltigen Gas, insbesondere aus einer Mischung aus Luft und reinem Sauerstoff, wie dies einer bevorzugten Ausführungsform der vorliegenden Erfindung entspricht. Dadurch, dass der Gasstrom Sauerstoff beinhaltet und bevorzugt aus einer Mischung aus Luft und Sauerstoff besteht, kann zum einen Sauerstoff in für die Verbrennungsprozesse ausreichender Menge im Brennraum bereitgestellt werden und zum anderen gemäß der bevorzugten Ausführungsform der Lambdawert im Brennraum eingestellt werden. Bevorzugt besteht der Gasstrom aus reinem Sauerstoff als sauerstoffhaltigem Gas. Je nach Anwendungsfall werden Lambdawerte von 0,8 bis 1,5 für geeignet angesehen, um Feststoffpartikel verschiedenster Art geeignet umzusetzen.

Um zu verhindern, dass die Flammen der Verbrennungsprozesse im Brennraum bei der Durchführung des erfindungsgemäßen Verfahrens in die Aufgabevorrichtung zurückschlagen, ist das erfindungsgemäße Verfahren gemäß einer bevorzugten Ausführungsform der vorliegenden Erfindung dahingehend weitergebildet, dass der Gasstrom mit einer Gasströmgeschwindigkeit über der Zündgeschwindigkeit der Feststoffpartikel, bevorzugt mit einer Gasströmgeschwindigkeit der zumindest doppelten Zündgeschwindigkeit, in den Brennraum eingestoßen wird. Die Zündgeschwindigkeit hängt von der Art der Feststoffpartikel ab und ist für eine Vielzahl von Feststoffpartikeln bekannt. Die Zündgeschwindigkeit drückt jene Geschwindigkeit aus, mit der sich eine Flamme ausbreitet. Wenn nun gemäß dieser bevorzugten Ausführungsform der vorliegenden Erfindung der Gasstrom mit einer Gasströmgeschwindigkeit über der Zündgeschwindigkeit der Feststoffpartikel, bevorzugt mit einer Gasströmgeschwindigkeit der zumindest doppelten Zündgeschwindigkeit, in den Brennraum eingestoßen wird, kann sichergestellt werden, dass die brennenden Feststoffpartikel nicht in die Richtung der Aufgabevorrichtung zurückzünden und ein besonders sicherer Prozessablauf kann somit garantiert werden.

Zur weiteren Verbesserung der Verwirbelung der mit dem erfindungsgemäßen Verfahren aufzuarbeitenden Feststoffpartikel kann das Verfahren gemäß einer bevorzugten Ausführungsform der vorliegenden Erfindung dahingehend weitergebildet sein, dass der Gasstrom im Bereich einer konvergenten Düse der Lanze oder im Bereich einer Verengung einer Lavaldüse der Lanze mit einer Gasströmgeschwindigkeit über der Schallgeschwindigkeit des eingestoßenen Gases in den Brennraum eingestoßen wird. Es ist offensichtlich, dass die Einstellung derart hoher Gasstromgeschwindigkeiten aufgrund des Bernoulli-Effekts zu starken Unterdrücken neben der Lanze und starken Turbulenzen führt, sodass eventuell aneinander anhaftende Feststoffpartikel zumeist vollständig voneinander getrennt werden, sodass eine hohe spezifische Oberfläche für die Verbrennungsprozesse zur Verfügung gestellt wird.

Wie oben im Zusammenhang mit der erfindungsgemäßen Vorrichtung beschrieben, kann es gemäß einer bevorzugten Ausführungsform der vorliegenden Erfindung vorteilhaft sein, dass der Speicherraum durch einen den Speicherraum nach unten begrenzenden Boden mit einem Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, durchströmt wird. Auf diese Weise wird erreicht, dass in der Aufgabevorrichtung eine Wirbelschicht der aufzuarbeitenden Feststoffpartikel vorliegt, sodass die Feststoffpartikel im Fluidisierungsmedium suspendiert werden und damit bereits verwirbelt in den Ringraum zwischen dem Anschlussrohr und der Ummantelung gefördert werden. Falls nötig, beispielsweise bei der Aufarbeitung von Schlämmen, bei denen Feststoffpartikel in flüssigen Phasen suspendiert sind, kann das Fluidisierungsmedium auch zum Trocknen oder bei Trockenschlämmen zum Nachtrocknen dienen, wofür das Fluidisierungsmedium bevorzugt mit erhöhter Temperatur durch den Boden gefördert wird. Das Fluidisierungsmedium kann hierbei auch bereits für die Einstellung von der Verbrennung in der Brennkammer förderlichen chemischen und verbrennungsstöchiometrischen Parametern optimiert sein, wenn, wie dies bevorzugt vorgesehen ist, nicht nur Luft sondern je nach Bedarf auch Sauerstoff, Wasserdampf, CO₂, H₂/CO, Cl₂, NH₃, Phosgen, gasförmige Kohlenwasserstoffe und/oder N₂ als Fluidisierungsmedium eingesetzt werden.

Ebenso wurde bereits im Zusammenhang mit der erfindungsgemäßen Vorrichtung beschrieben, dass in den Speicherraum über zumindest eine Anschlussleitung für ein Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂ eingebracht werden kann, und/oder gasförmige, flüssige und/oder feststoffliche Additive, insbesondere Cl₂, COCl₂, PVC, NaCl, CaCl₂, H₂O eingebracht werden können, wie dies einer bevorzugten Ausführungsform der vorliegenden Erfindung entspricht.

Gemäß einer bevorzugten Ausführungsform der vorliegenden Erfindung ist das erfindungsgemäße Verfahren dahingehend weitergebildet, dass gasförmige und/oder feststoffliche Reaktionsprodukte abgezogen werden und feststoffliche Reaktionsprodukte von gasförmigen Reaktionsprodukten in einem Zyklonabscheider abgetrennt werden. In dem Zyklonabscheider werden die genannten Produkte voneinander getrennt und können in der Folge geeignet weiterbehandelt werden.

Bevorzugt werden feststoffliche Reaktionsprodukte der nichteisenmetallurgischen Aufarbeitung zugeführt, wofür dem Fachmann eine Vielzahl von Verfahren bekannt ist.

Gemäß einer speziellen und bevorzugten Ausführungsform der vorliegenden Erfindung ist es vorgesehen, dass gasförmige Reaktionsprodukte zur Kühlung mit Holz in Kontakt und zur Reaktion gebracht werden und dabei gebildete, mit anhaftenden Reaktionsprodukten beladene Holzkohle- und/oder Holzaschepartikel der nichteisenmetallurgischen Aufarbeitung zugeführt werden. Mit anhaftenden Reaktionsprodukten beladene Holzkohlepartikel können hierbei in der nichteisenmetallurgischen Aufarbeitung direkt als Brennstoff eingesetzt werden.

Ein konkretes Anwendungsbeispiel der vorliegenden Erfindung wird im Folgenden beschrieben:
1 t (Tonne) Trockenklärschlamm (100% Trockensubstanz) mit einem Enthalpieinhalt von 12 MJ/kg entsprechend einem Energieinhalt von 3,6 KWh/kg wird mit 0,1 t CaCO₃ und 0,2 t H₂O einem Mischer aufgegeben, wobei 47,4 kg NH₃ ausgetrieben werden. Die Mischung zu 1,25 t wird mit 1,26 t O₂ (λ=1 (Lambda=1))in den Brennraum der erfindungsgemäßen Vorrichtung eingestoßen. Im Brennraum herrscht hierbei eine Temperatur von ungefähr 1600°C. Als feststoffliche Reaktionsprodukte werden an der Abstichvorrichtung 0,5 t schmelzflüssige Phosphatschlacke erhalten mit einem Wärmeinhalt von 200 KWh. Die Phosphatschlackenschmelze wird auf einem 600°C heißen Zinnbad (gemäß WO 2020/124105 A1 der Anmelderin) gekühlt und dabei verglast, um 0,5 t einer zementgängigen, hochhydraulischen Schlacke mit einem Wärmeinhalt von 80 KWh zu erhalten. Dem Verfahren gemäß WO 2020/124105 A1 werden weiters pro Tonne Trockenklärschlamm 0,43 t Holz zugegeben, woraus 0,14 t Holzkohle und 0,29 t Pyrolysegas entstehen. Die bei der Verglasung gebildete Holzkohle kann durch Behandlung mit Wasserdampf zu Aktivkohle weiterverarbeitet werden.

Bei der Verbrennung des Trockenklärschlamms in der erfindungsgemäßen Vorrichtung (Injektorbrenner) entstehen 2,0 t Prozessgas bei einer Temperatur von ungefähr 1600°C mit einem Wärmeinhalt von 3,4 MWh. Das Prozessgas besteht aus ungefähr 1,02 t CO₂, 0,97 t H₂O und 0,03 t Schwefel (S). Die ungefähr 2 t des Prozessgases können wiederum mit 1 t Holz (d.h. 0,5 t Kohlenstoff, 0,43 t Sauerstoff und 0,06 t H₂O) in Kontakt gebracht und dadurch gekühlt werden. Hierbei wird die Temperatur des Gases von anfänglich ungefähr 1600°C auf ungefähr 700°C gesenkt, und ungefähr 1,9 MWh fallen als nutzbare Wärme an. Aus den 3 t der Ausgangsstoffe (2 t Prozessgas und 1 t Holz) werden hierbei durch Vergasung des Holzes 1,628 t CO, 0,97 t H₂O, 0,332 t CO₂, 0,06 t H₂ und 0,03 t Schwefel gebildet. Diese Produkte fallen gasförmig an und können in der Folge durch Kontakt mit 0,072 t Dampf zu 0,174 t H₂, 2,89 t CO₂ und 0,03 t Schwefel umgesetzt werden (Wassergasreaktion: CO+ H₂O → CO₂+H₂. Die Gesamtausbeute an H₂ Wasserstoff-Gas ergibt sich aus dem gebildeten Wassergas und dem Pyrolysegas der Verglasung der Phosphatschlacke zu ungefähr 0,2 t H₂ pro Tonne Trockenklärschlamm. Wenn anstelle von Holz Altplastik zur Kühlung des Prozessgases eingesetzt wird, fällt bedeutend mehr H₂ an und es kann zusätzlich Methan (Erdgas) gebildet werden. Neben Altplastik kommen auch Biomasse, diverse Müllfraktionen, Shredder-Leichtfraktion und/oder Altöl als Kühlmittel für das Prozessgase zur Bildung von Synthesegas in Frage. Diese als Quenchen bekannten Kühlverfahren erfolgen im Zusammenhang mit der vorliegenden Erfindung bevorzugt in einem Steigrohrvergaser und die entweichenden Gase können in der Folge in einem Gaskonverter unter Zugabe von Wasser und unter Kühlung kondensiert werden. Als Abgase des Gaskonverters werden dadurch letztlich nur H₂ und CO₂ erhalten. Die flüchtigen Metallspezies aus dem Injektorbrenner kondensieren im Gaskonverter als Aerosole und weisen aufgrund der feinen Zerstäubung im erfindungsgemäßen Injektorbrenner eine extrem große spezifische Oberfläche auf. Die derartig feinteilig vorliegenden Metallaerosole wirken aus diesem Grund bei der Wassergasreaktion in hervorragender Weise als Katalysatoren. Dies gilt insbesondere dann, wenn die Reaktion im Injektorbrenner bei λ>1 durchgeführt wird oder wenn der Wassergasreaktion Sauerstoff zugegeben wird. Neben der Zugabe von reinem Sauerstoff kann hierzu auch Luft, Wasserdampf und/oder CO₂ zum Einsatz gelangen.

Die Erfindung wird nachfolgend anhand eines in der Zeichnung dargestellten Ausführungsbeispiels näher erläutert. In dieser zeigen
Figur 1 ein vereinfachtes Verfahrensschema des erfindungsgemäßen Verfahrens,
Figur 2 eine vereinfachte Schnittdarstellung der erfindungsgemäßen Vorrichtung,
Figur 3 ein Detail der erfindungsgemäßen Vorrichtung im Bereich der Lanze
Figur 4 ein Detail der erfindungsgemäßen Vorrichtung im Bereich der Lanze gemäß einer bevorzugten Variante der vorliegenden Erfindung und
Figur 5 eine bevorzugte Ausführungsform der Ummantelung mit Verteilrohren.

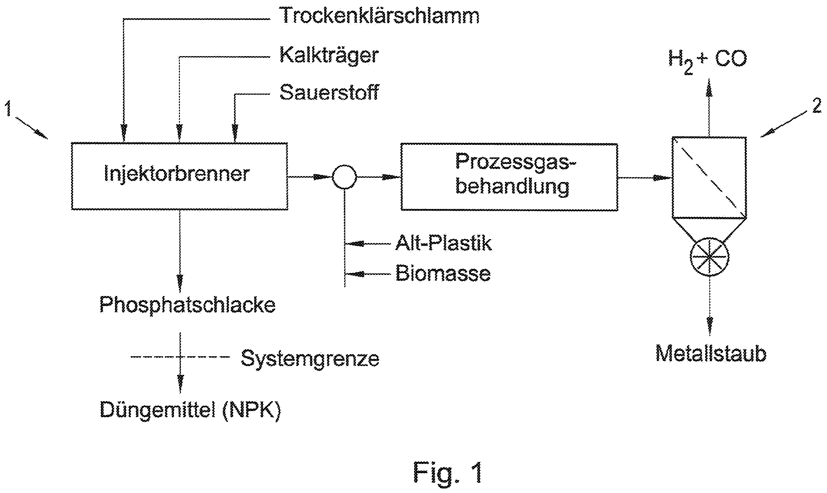

In Figur 1 ist die Vorrichtung beziehungsweise der Injektorbrenner gemäß der vorliegenden Erfindung mit 1 bezeichnet. Der Injektorbrenner 1 wird beispielsweise mit Trockenklärschlamm und Kalkträgern beschickt, wobei Trockenklärschlamm und Kalkträger mit einem sauerstoffhaltigen Gas beziehungsweise einem Gemisch aus Luft und reinem Sauerstoff als Fluidisierungsmedium fluidisiert werden. Nach der Verbrennung der chemisch beladenen Feststoffpartikel sammelt sich Phosphatschlacke am Boden des Injektorbrenners 1 an und kann in der Zementindustrie nach Reduktion zu P₄ und phosphatfreier Schlacke nach dem Verfahren gemäß der österreichischen Patentanmeldung A0143/2020 der Anmelderin als hydraulischer Zuschlagsstoff oder in der Landwirtschaft als Düngemittel eingesetzt werden. Gasförmige sowie im Gasstrom suspendierte Feststoffpartikel werden der Prozessgasbehandlung zugeführt. Hierbei können die gasförmigen Reaktionsprodukte beispielsweise mit Altplastik oder Biomasse in Kontakt gebracht und dergestalt gekühlt werden, während die Organika des Altplastiks vollständig zu H₂ und CO umgesetzt werden. Die gebildeten Gase werden in einem Staubfilter 2 oder einem Zyklonabscheider 2 getrennt, woraufhin der abgetrennte Metallstaub der metallurgischen Aufarbeitung zugeführt wird, während H₂ und CO als Synthesegas thermisch verwertet oder in der chemischen Industrie anderweitig Verwendung finden können.

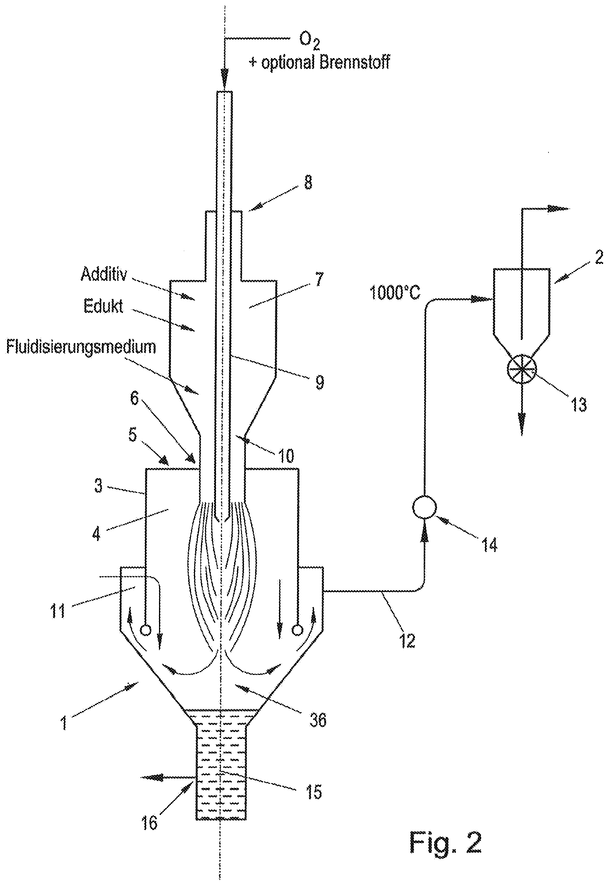

In Figur 2 ist das Gehäuse der erfindungsgemäßen Vorrichtung mit dem Bezugszeichen 3 bezeichnet und der Brennraum in dem Gehäuse 3 mit dem Bezugszeichen 4. An einem ersten axialen Ende 5 des Gehäuses 3, welches das obere Ende des aufrecht stehenden Injektorbrenners 1 darstellt, ist eine Eintrittsöffnung 6 in dem Gehäuse 3 angeordnet an die eine einen Speicherraum 7 aufweisende Aufgabevorrichtung 8 angeschlossen ist. Eine Lanze 9 zum Einstoßen von Gasen und/oder Aerosolen in den Brennraum 4 durchsetzt die Eintrittsöffnung 6 axial und taucht axial in den Brennraum 4 ein. Eine Abgabeöffnung der Aufgabevorrichtung 8 ist mit 10 bezeichnet, wobei die Abgabeöffnung 10 ebenfalls axial von der Lanze 9 durchsetzt wird. Das Gehäuse 3 bildet einen Abzugsraum 11 für Reaktionsprodukte aus, der als den Brennraum 4 außen umgebender, ringraumförmiger Kamin ausgebildet ist. Über eine Abzugsleitung 12 werden gasförmige oder im Gasstrom suspendierte feststoffliche Reaktionsprodukte in einen Staubfilter 2 oder einen Zyklonabscheider 2 geleitet und feststoffliche Reaktionsprodukte beispielsweise über eine Zellradschleuse 13 ausgetragen. An der Position 14 können den aus dem Brennraum 4 beziehungsweise dem Abzugsraum 11 abgezogenen Reaktionsprodukten reaktive Adsorbentien wie Kohlenwasserstoffe, Biomasse, Holz, Kalkstein und dergleichen zugegeben werden. Mit 15 ist ein Sumpf für schmelzflüssige Reaktionsprodukte, in aller Regel Phosphatschlacke bezeichnet, aus welchem die schmelzflüssigen Reaktionsprodukte mittels einer Abstichvorrichtung 16 abgelassen werden können. Hierbei ist insbesondere an ein Verfahren zum Verglasen von Phosphatschlackenschmelze gedacht, wie dies in der WO 2020/124105 A1 der Anmelderin der vorliegenden Anmeldung offenbart und beschrieben ist. Die Längsachse der erfindungsgemäßen Vorrichtung ist mit dem Bezugszeichen 36 bezeichnet.

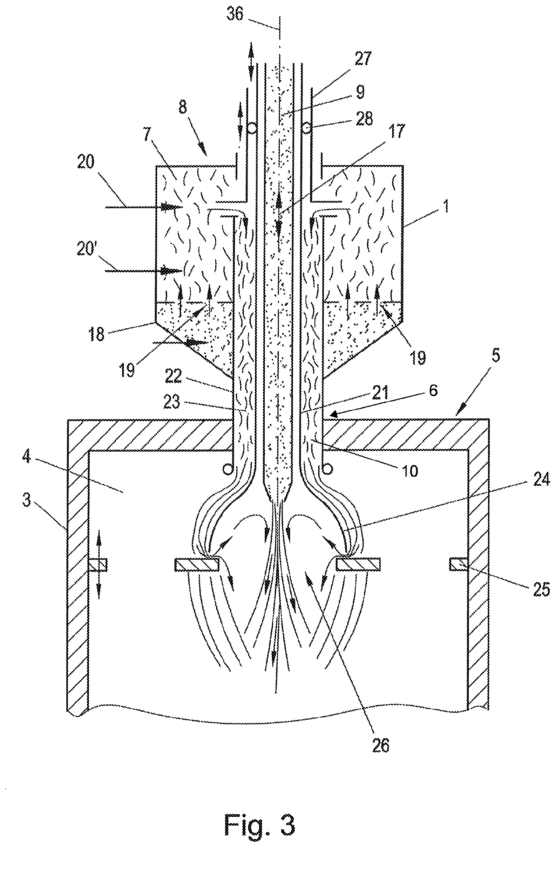

In Figur 3 ist nun zu erkennen, dass der Speicherraum 7 der Aufgabevorrichtung 8 von der Lanze 9 axial durchsetzt wird und dass die Lanze 9 weiters die Abgabeöffnung 10 der Aufgabevorrichtung 8 sowie die Eintrittsöffnung 6 des Gehäuses 3 axial durchsetzt. Die Lanze 9 ist in der axialen Richtung gemäß dem Doppelpfeil 17 axial verschiebbar und kann somit unterschiedlich weit in den Brennraum 4 eintauchen. Der Speicherraum 7 der Aufgabevorrichtung 8 ist durch einen Boden 18 nach unten begrenzt, wobei der Boden 18 Bohrungen 19 oder Schlitze 19 aufweist, wodurch der Boden 18 von einem Fluidisierungsmedium für die Feststoffpartikel durchströmt werden kann. Im Speicherraum 7 der Aufgabevorrichtung 8 liegen die Feststoffpartikel als Wirbelschicht fluidisiert vor. Anschlussleitungen 20 und 20' münden ebenfalls in den Speicherraum 7, um Fluidisierungsmedien für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂ einzubringen. Die Lanze 9 ist durch eine Ummantelung 21 sowie ein Anschlussrohr 22 für die Aufgabevorrichtung 8, welches sich unter Ausbildung eines Ringraums 23 zwischen dem Anschlussrohr 22 und der Ummantelung 21 über die Abgabeöffnung 10 hinaus in den Speicherraum 7 der Aufgabevorrichtung 8 erstreckt, vom Speicherraum 7 abgetrennt, wobei sich die Ummantelung 21 in den Brennraum 4 und über den in den Brennraum 4 eintauchenden Bereich der Lanze 9 erstreckt. Mit der Lanze 9 wird ein Gasstrom mit hoher kinetischer Energie in den Brennraum 4 eingestoßen, wodurch sich ein Unterdrucksystem mit starken Verwirbelungen ausbildet, welches die Feststoffpartikel aus dem Ringraum 23 und um die Erweiterung 24 der Ummantelung 21 herum in den Bereich der Lanze 9 saugt. Mit 25 ist eine Trennplatte mit einem mit der Ummantelung 21 konzentrischen Loch 26 bezeichnet, wobei das Loch 26 einen geringeren Durchmesser aufweist, als der Durchmesser des brennraumseitigen, offenen Endes der Ummantelung 21 und die Trennplatte 25 in der axialen Richtung 17 verschiebbar ist. Sowohl die Lanze 9 als auch die Ummantelung 21 sind unabhängig voneinander in der axialen Richtung 17 verschiebbar. Mit dem Bezugszeichen 27 ist ein in axialer Richtung verschiebbares, weiteres Rohr bezeichnet, welches beabstandet vom Anschlussrohr 22 an das Anschlussrohr 22 anschließt und welches gegenüber der Ummantelung 21 der Lanze 9 durch Dichtlippen 28 abgedichtet ist.

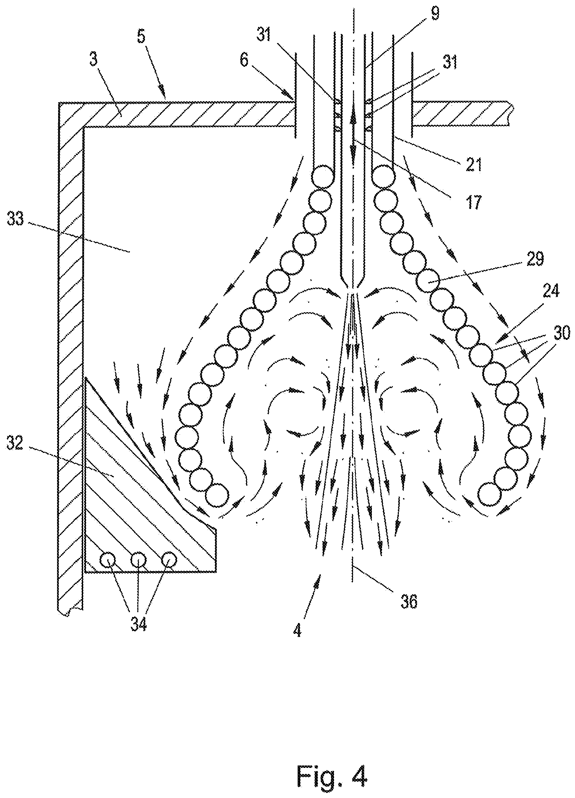

In Figur 4 ist zu erkennen, dass die Ummantelung 21 in dem Bereich der Erweiterung 24 von einem mit Kühlmittel durchströmbaren metallischen Rohr 29 gebildet ist, das in Form von aneinander anliegenden Spiralgängen 30 zu der Erweiterung 24 gewickelt ist, wobei die Bereiche zwischen den Spiralgängen 30 mit dem Metall, aus dem das Rohr 29 besteht, verfüllt und geglättet sein können, was jedoch in Figur 4 nicht dargestellt ist. Die Lanze 9 ist gegenüber der Ummantelung 21 durch Dichtlippen 31 abgedichtet. Mit 32 ist ein in der axialen Richtung 17 verschiebbarer Leitkörper bezeichnet, der in der Richtung von der Eintrittsöffnung 6 des Gehäuses 3 zum Brennraum 4 einen nach radial innen gerichteten, bevorzugt gekrümmten, rotationssymmetrischen Verlauf aufweist, wodurch im Brennraum 4 eine Vorkammer 33 gebildet wird. Die rotationssymmetrische Erweiterung 24 der Ummantelung 21 ist in ihrer sinusartigen Glockenform an den rotationssymmetrischen Verlauf des Leitkörpers 32 angepasst, wodurch ein optimierter Wirbelkanal zwischen der Erweiterung 24 und dem Leitkörper 32 für die aufzuarbeitenden Feststoffpartikel gebildet wird. Der Leitkörper ist durch innenliegende Kühlleitungen 34 gekühlt. Die Lanze 9 ist gegenüber der Ummantelung 21 durch Dichtlippen 31 abgedichtet.

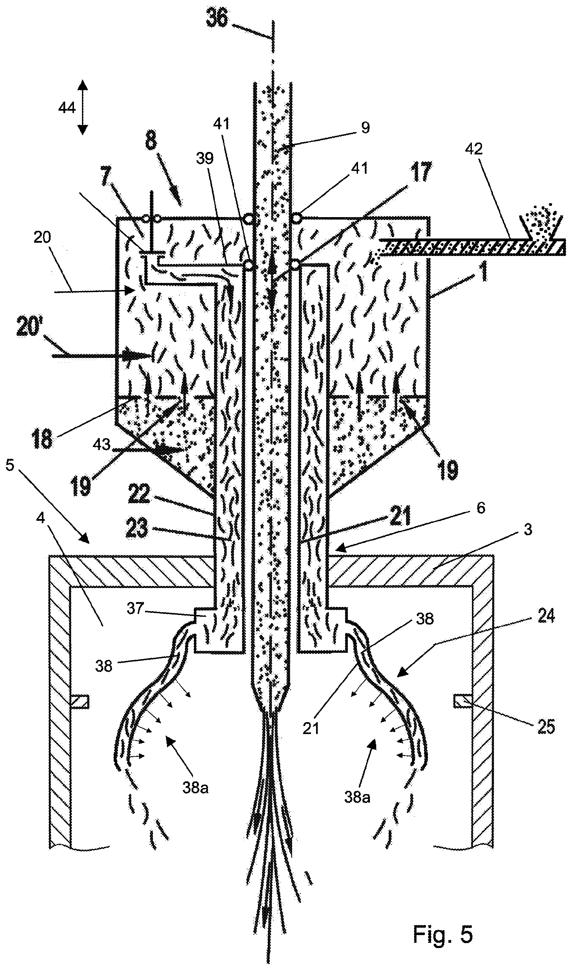

In Figur 5 sind wiederum gleiche oder einander entsprechende Teile mit gleichen Bezugszeichen versehen. Es ist zu erkennen, dass das Anschlussrohr 22 im Brennraum 4 zur Ausbildung eines Registers 37 erweitert ist. An das Register schließen Verteilrohre 38 an, die stofflich mit der Ummantelung 21 verbunden sind und hier auch die Innenseite der Ummantelung 21 ausbilden. Die Ummantelung 21 ist im Brennraum 4 mit zur Lanze 9 gerichteten Schlitzen und/oder Löchern versehen, was durch die den aus den Schlitzen und/oder Löchern austretenden Festpartikelstrom darstellenden Pfeilscharen 38a versinnbildlicht ist. Das Anschlussrohr 22 ist im Speicherraum 7 axial, d.h. oben verschlossen und eine einstellbar öffenbare Zuleitung 39 mündet in radialer Richtung in das Anschlussrohr 22. Durch Öffnen und Schließen des Verschlusskörpers 40 im Sinne des Doppelpfeils 44 kann die Zuleitung 39 verschlossen werden, wobei die Spaltbreite zwischen dem Verschlusskörper 40 und der Zuleitung einstellbar ist. Mit dem Bezugszeichen 41 sind Dichtlippen bezeichnet. Die Aufgabe von Material erfolgt über die Förderschnecke 42 beziehungsweise über eine schematisch dargestellte Aufgabe 43 im Bereich unter dem Boden 18, von wo auch Druckluft zur Fluidisierung der Feststoffpartikel zu geführt wird.

## Patentansprüche

1. Vorrichtung zum Aufarbeiten von chemisch belasteten Feststoffpartikeln, wie Verbrennungsstäuben, Schleifstäuben, Stahlwerksstäuben, Klärschlamm, Tiermehl, Shredder-Leichtfraktion und Batterieschrott, wobei die Vorrichtung (1) ein Gehäuse (3) und in dem Gehäuse (3) einen mit Feuerfestmaterial ausgekleideten Brennraum (4) aufweist, wobei an einem ersten axialen Ende (5) des Gehäuses (3) eine axiale Eintrittsöffnung (6) in das Gehäuse (3) vorgesehen ist, mit der eine einen Speicherraum (7) für die Feststoffpartikel aufweisende Aufgabevorrichtung (8) mit einer Abgabeöffnung (10) für die Feststoffpartikel verbunden ist, wobei eine Lanze (9) zum Einstoßen von Gasen und/oder Aerosolen in den Brennraum (4) die Eintrittsöffnung (6) axial durchsetzt und axial in den Brennraum (4) eintaucht, wobei die Lanze (9) durch eine Ummantelung (21) vom Speicherraum (7) abgetrennt ist, wobei sich die Ummantelung (21) in den Brennraum (4) und über den in den Brennraum (4) eintauchenden Bereich der Lanze (9) erstreckt, **dadurch gekennzeichnet, dass** die Ummantelung (21) im Brennraum (4) eine Erweiterung (24) ihres Durchmessers aufweist, bevorzugt auf zumindest den Durchmesser der Abgabeöffnung (10), wobei bevorzugt die Erweiterung (24) der Ummantelung (21) eine gekrümmte rotationssymmetrische Form aufweist, insbesondere die Form einer sinusartigen Rotationsfläche.

2. Vorrichtung nach Anspruch 1, **dadurch gekennzeichnet, dass** die Lanze (9) unter Ausbildung einer konvergenten Düse oder einer Lavaldüse in den Brennraum (4) mündet, wobei bevorzugt die Ummantelung (21) in axialer Richtung gegenüber der Lanze (9) verschiebbar ist und/oder die Lanze (9) in axialer Richtung gegenüber der Ummantelung (21) verschiebbar ist.

3. Vorrichtung nach Anspruch 1 oder 2, **dadurch gekennzeichnet, dass** sich ausgehend von der Eintrittsöffnung (6) ein Anschlussrohr für die Aufgabevorrichtung (8) unter Ausbildung eines Ringraums (23) zwischen dem Anschlussrohr (22) und der Ummantelung (21) über die Abgabeöffnung (10) hinaus in den Speicherraum (7) der Aufgabevorrichtung (8) erstreckt.

4. Vorrichtung nach Anspruch 3, **dadurch gekennzeichnet, dass** das Anschlussrohr (22) im Brennraum (4) zur Ausbildung eines Registers (37) erweitert ist und dass ausgehend vom Register (37) Verteilrohre (38) für Feststoffpartikel an der Ummantelung (21) entlang bis zum brennraumseitigen Ende der Ummantelung (21) verlaufen, wobei bevorzugt die Verteilrohre (38) so an der Ummantelung (21) angeordnet sind, dass vom Speicherraum (7) der Aufgabevorrichtung (8) durch den Ringraum (23) in den Brennraum (4) gelangende Feststoffpartikeln mit Drall in den Brennraum (4) eintreten, wobei bevorzugt die Verteilrohre (38) und die Ummantelung (21), bevorzugt stofflich, miteinander verbunden sind und wobei die Verteilrohre (38) die Innenseite der Ummantelung (21) ausbilden, wobei bevorzugt
die Ummantelung (21) im Brennraum (4) zumindest in einem Teilbereich mit zur Lanze (9) gerichteten Schlitzen und/oder Löchern versehen ist.

5. Vorrichtung nach Anspruch 3 oder 4, **dadurch gekennzeichnet, dass** im Speicherraum (7) ein, bevorzugt in axialer Richtung verschiebbares, weiteres Rohr (27) beabstandet vom Anschlussrohr (22) an das Anschlussrohr (22) anschließt.

6. Vorrichtung Anspruch 3 oder 4, **dadurch gekennzeichnet, dass** das Anschlussrohr (22) im Speicherraum (7) axial verschlossen ist und eine radial mündende und einstellbar öffenbare Zuleitung zum Anschlussrohr (22) in das Anschlussrohr (22) mündet.

7. Vorrichtung nach einem der Ansprüche 1 bis 6, **dadurch gekennzeichnet, dass** in einer axialen Ebene der Aufgabevorrichtung (8) ein den Speicherraum (7) nach unten begrenzender Boden (18) angeordnet ist, der von unten von einem Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, durchströmbar ist, wobei bevorzugt in den Speicherraum (7) zumindest eine Anschlussleitung (20, 20') für das Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, und/oder gasförmige, flüssige und/oder feststoffliche Additive, insbesondere Cl₂, COCl₂, PVC, NaCl, CaCl₂, H₂O mündet.

8. Vorrichtung nach einem der Ansprüche 1 bis 7, **dadurch gekennzeichnet, dass** im Brennraum (4) in einer der Ummantelung (21) nachgeordneten Ebene zur Ausbildung einer Brennraumvorkammer (33) eine Trennplatte (25) mit einem mit der Ummantelung (21) konzentrischen Loch (26) angeordnet ist, wobei das Loch (26) einen geringeren Durchmesser aufweist, als der Durchmesser des brennraumseitigen, offenen Endes der Ummantelung (21), wobei bevorzugt die Trennplatte (25) in axialer Richtung verschiebbar ist, wobei bevorzugt die Trennplatte (25) eine Innenkühlung aufweist.

9. Vorrichtung nach einem der Ansprüche 1 bis 8, **dadurch gekennzeichnet, dass** im Brennraum (4) in einer der Ummantelung (21) nachgeordneten Ebene zur Ausbildung einer Brennraumvorkammer (33) ein Leitkörper (32), bevorzugt ein in axialer Richtung verschiebbarer Leitkörper (32), angeordnet ist, der in der Richtung von der Eintrittsöffnung (6) zum Brennraum (4) einen nach radial innen gerichteten, bevorzugt gekrümmten, rotationssymmetrischen Verlauf aufweist, wobei bevorzugt der Leitkörper (32) eine Innenkühlung (34) aufweist.

10. Vorrichtung nach einem der Ansprüche 1 bis 9, **dadurch gekennzeichnet, dass** das Gehäuse (3) einen Abzugsraum (11) für Reaktionsprodukte ausbildet, der bevorzugt als den Brennraum (4) außen umgebender, ringraumförmiger Kamin ausgebildet ist, wobei bevorzugt der Abzugsraum (11) über zumindest eine Abzugsleitung (12) mit einem Zyklonabscheider (2) verbunden ist und bevorzugt die Abzugsleitung (12) eine gasdynamische Drossel, insbesondere ein Teslaventil, aufweist.

11. Vorrichtung nach einem der Ansprüche 1 bis 10, **dadurch gekennzeichnet, dass** an einem zweiten axialen Ende des Gehäuses (3) ein Sumpf (15) sowie eine Abstichvorrichtung (16) für schmelzflüssige Reaktionsprodukte angeordnet ist, wobei bevorzugt das Gehäuse (3) im Bereich der Abstichvorrichtung (16) elektrisch beheizbar ist.

12. Vorrichtung nach Anspruch 1, **dadurch gekennzeichnet, dass** die Ummantelung (21) zumindest im Bereich der Erweiterung (24) von einem mit Kühlmittel durchströmten metallischen Rohr (29) gebildet ist, das in Form von aneinander anliegenden Spiralgängen (30) zu der Erweiterung (24) gewickelt ist, wobei bevorzugt die Bereiche zwischen Spiralgängen (30) mit dem Metall, aus dem das metallische Rohr (29) besteht, verfüllt oder geglättet sind und wobei bevorzugt das metallische Rohr (29) einen rechteckigen Querschnitt, bevorzugt quadratischen Querschnitt aufweist.

13. Verfahren zum Aufarbeiten von chemisch belasteten Feststoffpartikeln, wie Verbrennungsstäuben, Schleifstäuben, Stahlwerksstäuben, Klärschlamm, Tiermehl, Shredder-Leichtfraktion, Batterieschrott und dergleichen, mit einer Vorrichtung nach einem der Ansprüche 1 bis 12.

14. Verfahren nach Anspruch 13, wobei der Gasstrom aus einem sauerstoffhaltigen Gas besteht, insbesondere aus einer Mischung aus Luft und reinem Sauerstoff wobei bevorzugt ein Gasstrom mit einer Gasströmgeschwindigkeit über der Zündgeschwindigkeit der Feststoffpartikel, bevorzugt mit einer Gasströmgeschwindigkeit der zumindest doppelten Zündgeschwindigkeit, in den Brennraum eingestoßen wird und wobei weiter bevorzugt der Gasstrom im Bereich einer konvergenten Düse der Lanze oder im Bereich einer Verengung einer Lavaldüse der Lanze mit einer Gasströmgeschwindigkeit über der Schallgeschwindigkeit des eingestoßenen Gases in den Brennraum eingestoßen wird.

15. Verfahren nach Anspruch 13 oder 14, wobei der Speicherraum (7) durch einen den Speicherraum (7) nach unten begrenzenden Boden (18) mit einem Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂, durchströmt wird, wobei bevorzugt in den Speicherraum (7) über zumindest eine Anschlussleitung (20, 20') für das Fluidisierungsmedium für die Feststoffpartikel, insbesondere Luft, Sauerstoff, Wasserdampf, CO₂, H₂/CO, Cl₂, NH₃, Phosgen, gasförmige Kohlenwasserstoffe und/oder N₂ eingebracht wird, und/oder gasförmige, flüssige und/oder feststoffliche Additive, insbesondere Cl₂, COCl₂, PVC, NaCl, CaCl₂, H₂O eingebracht werden.

16. Verfahren nach einem der Ansprüche 13 bis 15, wobei gasförmige und/oder feststoffliche Reaktionsprodukte abgezogen werden und feststoffliche Reaktionsprodukte von gasförmigen Reaktionsprodukten in einem Zyklonabscheider (2) abgetrennt werden und bevorzugt feststoffliche Reaktionsprodukte der nichteisenmetallurgischen Aufarbeitung zugeführt werden und bevorzugt gasförmige Reaktionsprodukte zur Kühlung mit Holz in Kontakt und zur Reaktion gebracht werden und dabei gebildete, mit anhaftenden Reaktionsprodukten beladene Holzkohle- und/oder Holzaschepartikel der nichteisenmetallurgischen Aufarbeitung zugeführt werden.

## Claims

1. Apparatus for processing chemically burdened particulate solids, such as combustion dusts, grinding dusts, steel mill dusts, sewage sludge, animal meal, shredder light fraction and battery scrap, wherein the apparatus (1) comprises a housing (3) and in the housing (3) a combustion chamber (4) lined with refractory material, wherein an axial inlet opening (6) into the housing (3) is provided at a first axial end (5) of the housing (3), to which a feeding apparatus (8 comprising a storage chamber (7) for the particulate solids is connected with a dispensing opening (10) for the particulate solids, wherein a lance (9) for injecting gases and/or aerosols into the combustion chamber (4) passes axially through the inlet opening (6) and plunges axially into the combustion chamber (4), wherein the lance (9) is separated from the storage chamber (7) by a sheathing (21), wherein the sheathing (21) extends into the combustion chamber (4) and beyond the region of the lance (9) plunging into the combustion chamber (4), **characterized in that** the sheathing (21) in the combustion chamber (4) comprises an extension (24) of its diameter, preferably to at least the diameter of the dispensing opening (10), the extension (24) of the sheathing (21) preferably having a curved rotationally symmetrical shape, in particular the shape of a sinusoidal surface of rotation.

2. Apparatus according to claim 1, **characterized in that** the lance (9) opens into the combustion chamber (4), forming a convergent nozzle or a de Laval nozzle, the sheathing (21) preferably being slidable in the axial direction relative to the lance (9) and/or the lance (9) being slidable in the axial direction relative to the sheathing (21).

3. Apparatus according to claim 1 or 2, **characterized in that**, starting from the inlet opening (6), a connection pipe for the feeding apparatus (8) extends beyond the dispensing opening (10) into the storage chamber (7) of the feeding apparatus (8), forming an annular space (23) between the connection pipe (22) and the sheathing (21).

4. Apparatus according to claim 3, **characterized in that** the connection pipe (22) in the combustion chamber (4) is widened to form a register (37) and **in that**, starting from the register (37), distribution pipes (38) for particulate solids run along the sheathing (21) to the end of the sheathing (21) on the combustion chamber side, the distribution pipes (38) preferably being arranged on the sheathing (21) in such a way, that particulate solids passing from the storage chamber (7) of the feeding apparatus (8) through the annular space (23) into the combustion chamber (4) enter the combustion chamber (4) with a swirl, wherein preferably the distribution pipes (38) and the sheathing (21) are, preferably materially, connected to one another and wherein the distribution pipes (38) form the inside of the sheathing (21), wherein preferably the sheathing (21) in the combustion chamber (4) is provided at least in a partial region with slots and/or holes directed towards the lance (9).

5. Apparatus according to claim 3 or 4, **characterized in that** in the storage chamber (7) an additional pipe (27), preferably slidable in the axial direction, follows the connection pipe (22) at a distance from the connection pipe (22).

6. Apparatus according to claim 3 or 4, **characterized in that** the connection pipe (22) in the storage chamber (7) is axially closed and a radially opening and adjustably openable supply duct to the connection pipe (22) opens into the connection pipe (22).

7. Apparatus according to any one of claims 1 to 6, **characterized in that** in an axial plane of the feeding apparatus (8) there is arranged a tray (18) downwardly delimiting the storage chamber (7) through which a fluidization medium for the particulate solids, in particular air, oxygen, water vapour, CO₂, H₂/CO, Cl₂, NH₃, phosgene, gaseous hydrocarbons and/or N₂, can flow from below, wherein preferably at least one connection duct (20, 20') for the fluidization medium for the particulate solids, in particular air, oxygen, water vapour, CO₂, H₂/CO, Cl₂, NH₃, phosgene, gaseous hydrocarbons and/or N₂, and/or gaseous, liquid and/or solid additives, in particular Cl₂, COCl₂, PVC, NaCl, CaCl₂, H₂O, opens into the storage chamber (7).

8. Apparatus according to any one of claims 1 to 7, **characterized in that** in the combustion chamber (4) in a plane downstream of the sheathing (21) a separating plate (25) with a hole (26) concentric with the casing (21) is arranged to form a combustion prechamber (33) , wherein the hole (26) comprises a smaller diameter than the diameter of the open end of the sheathing (21) on the combustion chamber side, wherein preferably the separating plate (25) is slidable in the axial direction, wherein preferably the separating plate (25) comprises an internal cooling.

9. Apparatus according to any one of claims 1 to 8, **characterized in that** in the combustion chamber (4) in a plane downstream of the sheathing (21) a guide body (32), preferably a guide body (32) slidable in the axial direction is arranged to form a combustion prechamber (33), which comprises a radially inwardly directed, preferably curved, rotationally symmetrical gradient in the direction from the inlet opening (6) to the combustion chamber (4), wherein preferably the guide body (32) preferably comprises an internal cooling (34).

10. Apparatus according to any one of claims 1 to 9, **characterized in that** the housing (3) forms an exhaust chamber (11) for reaction products, which is preferably designed as an annular stack surrounding the combustion chamber (4) on the outside, wherein preferably the exhaust chamber (11) is connected to a cyclone separator (2) via at least one exhaust duct (12) and preferably the exhaust duct (12) comprises a gas-dynamic throttle, in particular a Tesla valve.

11. Apparatus according to any one of claims 1 to 10, **characterized in that** at a second axial end of the housing (3), a sump (15) and a tapping device (16) for molten reaction products are arranged, the housing (3) preferably being electrically heatable in the region of the tapping device (16).

12. Apparatus according to claim 1, **characterized in that** the sheathing (21) is formed, at least in the region of the extension (24), by a metallic pipe (29) through which coolant flows and which is wound in the form of adjacent spiral flights (30) to form the extension (24), wherein preferably the areas between the spiral flights (30) are filled or smoothed with the metal of which the metallic pipe (29) is composed of, and wherein the metallic pipe (29) preferably comprises a rectangular cross-section, preferably a square cross-section.

13. Method for processing chemically burdened particulate solids, such as combustion dusts, grinding dusts, steel mill dusts, sewage sludge, animal meal, shredder light fraction, battery scrap and the like, with an apparatus according to any one of claims 1 to 12.

14. Method according to claim 13, wherein the gas stream consists of an oxygen-containing gas, in particular of a mixture of air and pure oxygen, wherein preferably a gas flow is injected into the combustion chamber at a gas flow velocity above the ignition velocity of the particulate solids and preferably at a gas flow velocity of at least twice the ignition velocity, and wherein more preferably the gas flow in the region of a convergent nozzle of the lance or in the region of a constriction of a de Laval nozzle of the lance is injected into the combustion chamber at a gas flow velocity above the sonic velocity of the injected gas.

15. Method according to claim 13 or 14, wherein the storage chamber (7) is flowed through with a fluidization medium for the particulate solids , in particular air, oxygen, water vapour, CO₂, H₂/CO, Cl₂, NH₃, phosgene, gaseous hydrocarbons and/or N₂, through a tray (18) downwardly delimiting the storage chamber (7), wherein preferably the fluidization medium for the particulate solids, in particular air, oxygen, water vapour, CO₂, H₂/CO, Cl₂, NH₃, phosgene, gaseous hydrocarbons and/or N₂ is introduced and/or gaseous, liquid and/or solid additives, in particular Cl₂, COCl₂, PVC, NaCl, CaCl₂, H₂O are introduced into the storage space (7) via at least one connection duct (20, 20').

16. Method according to any one of claims 13 to 15, wherein gaseous and/or solid reaction products are drawn off and solid reaction products are separated from gaseous reaction products in a cyclone separator (2) and preferably solid reaction products are routed to non-ferrous metallurgical processing and preferably gaseous reaction products are brought into contact with wood for cooling and caused to react and thereby formed charcoal and/or charcoal ash particles, loaded with adhering reaction products, are routed to non-ferrous metallurgical processing.

## Revendications

1. Dispositif de traitement de particules solides contaminées chimiquement, comme des poussières de combustion, des poussières de ponçage, des poussières d'aciérie, des boues d'épuration, des farines animales, une fraction légère de broyeur et de la ferraille de batterie, dans lequel le dispositif (1) comprend un boîtier (3) et, dans le boîtier (3), une chambre de combustion (4) revêtue d'un matériau ignifuge, dans lequel, à une première extrémité axiale (5) du boîtier (3), est prévue une ouverture d'entrée (6) dans le boîtier (3), avec laquelle est relié un dispositif de distribution (8) comprenant un réservoir (7) pour les particules solides, avec une ouverture de distribution (10) pour les particules solides, dans lequel une lance (9) pour l'injection de gaz et/ou d'aérosols dans la chambre de combustion (4) traverse axialement l'ouverture d'entrée (6) et plonge axialement dans la chambre de combustion (4), dans lequel la lance (9) est séparée du réservoir (7) par une enveloppe (21), dans lequel l'enveloppe (21) s'étend vers la chambre de combustion (4) et sur la partie de la lance (9) plongeant dans la chambre de combustion (4), **caractérisé en ce que** l'enveloppe (21) présente, dans la chambre de combustion (4), un élargissement (24) de son diamètre, de préférence au moins jusqu'au diamètre de l'ouverture de distribution (10), dans lequel, de préférence, l'élargissement (24) de l'enveloppe (21) présente une forme incurvée à symétrie de rotation, plus particulièrement la forme d'une surface de rotation sinusoïdale.

2. Dispositif selon la revendication 1, **caractérisé en ce que** la lance (9) débouche dans la chambre de combustion (4) en formant une buse convergente ou une buse de Laval, dans lequel, de préférence, l'enveloppe (21) peut coulisser dans la direction axiale par rapport à la lance (9) et/ou la lance (9) peut coulisser dans la direction axiale par rapport à l'enveloppe (21).

3. Dispositif selon la revendication 1 ou 2, **caractérisé en ce que**, à partir de l'ouverture d'entrée (6), s'étend un tube de raccordement pour le dispositif de distribution (8) en formant un espace annulaire (23) entre le tube de raccordement (22) et l'enveloppe (21) au-delà de l'ouverture de distribution (10) vers le réservoir (7) du dispositif de distribution (8).

4. Dispositif selon la revendication 3, **caractérisé en ce que** le tube de raccordement (22) est élargi dans la chambre de combustion (4) pour la formation d'un registre (37) et **en ce que**, à partir du registre (37), s'étendent des tubes de répartition (38) pour les particules solides le long de l'enveloppe (21) jusqu'à l'extrémité côté chambre de combustion de l'enveloppe (21), dans lequel, de préférence, les tubes de répartition (38) sont disposés sur l'enveloppe (21) de sorte que, du réservoir (7) du dispositif de distribution (8) à travers l'espace annulaire (23), en direction de la chambre de combustion (4), les particules solides entrent avec une rotation dans la chambre de combustion (4), dans lequel, de préférence les tubes de répartition (38) et l'enveloppe (21) sont reliés entre eux, de préférence par liaison de matière et dans lequel les tubes de répartition (38) forment la face interne de l'enveloppe (21), dans lequel, de préférence, l'enveloppe (21) est munie, dans la chambre de combustion (4), au moins dans une partie, de fentes et/ou de trous orientés vers la lance (9).

5. Dispositif selon la revendication 3 ou 4, **caractérisé en ce que**, dans le réservoir (7), un autre tube (27), coulissant de préférence dans la direction axiale et distant du tube de raccordement (22), se raccorde au tube de raccordement (22).

6. Dispositif selon la revendication 3 ou 4, **caractérisé en ce que** le tube de raccordement (22) est fermé axialement dans le réservoir (7) et une conduite d'alimentation à embouchure axiale et à ouverture réglable vers le tube de raccordement (22) débouche dans le tube de raccordement (22).

7. Dispositif selon l'une des revendications 1 à 6, **caractérisé en ce que**, dans un plan axial du dispositif de distribution (8), est disposé un fond (18) délimitant le réservoir (7) vers le bas, qui peut être traversé à partir du bas par un milieu de fluidisation pour les particules solides, plus particulièrement de l'air, de l'oxygène, de la vapeur d'eau, CO₂, H₂/CO, Cl₂, NH₃, du phosgène, des hydrocarbures gazeux et/ou N₂, dans lequel, de préférence, dans le réservoir (7) débouche au moins une conduite de raccordement (20, 20') pour le milieu de fluidisation pour les particules solides, plus particulièrement de l'air, de l'oxygène, de la vapeur d'eau, CO₂, H₂/CO, Cl₂, NH₃, du phosgène, des hydrocarbures gazeux et/ou N₂, et/ou des additifs gazeux, liquides et/ou solides, plus particulièrement Cl₂, COCl₂, PVC, NaCl, CaCl₂, H₂O.

8. Dispositif selon l'une des revendications 1 à 7, **caractérisé en ce que**, dans la chambre de combustion (4), dans un plan disposé en aval de l'enveloppe (21), est disposée, pour la formation d'une pré-chambre de combustion (33), une plaque de séparation (25) avec un trou (26) concentrique par rapport à l'enveloppe (21), dans lequel le trou (26) présente un diamètre plus petit que le diamètre de l'extrémité ouverte, côté chambre de combustion, de l'enveloppe (21), dans lequel, de préférence, la plaque de séparation (25) peut coulisser dans la direction axiale, dans lequel, de préférence, la plaque de séparation (25) comprend un refroidissement interne.

9. Dispositif selon l'une des revendications 1 à 8, **caractérisé en ce que**, dans la chambre de combustion (4), dans un plan disposé en aval de l'enveloppe (21), est disposé, pour la formation d'une pré-chambre de combustion (33), un corps de guidage (32), de préférence un corps de guidage (32) coulissant dans la direction axiale, qui présente, dans la direction de l'ouverture d'entrée (6) vers la chambre de combustion (4), une forme à symétrie de rotation orientée radialement vers l'intérieur, de préférence incurvée, dans lequel, de préférence, le corps de guidage (32) comprend un refroidissement interne (34).

10. Dispositif selon l'une des revendications 1 à 9, **caractérisé en ce que** le boîtier (3) forme une chambre de décharge (11) pour des produits de réaction, qui est conçue de préférence comme une cheminée de forme annulaire entourant à l'extérieur la chambre de combustion (4), dans lequel, de préférence, la chambre de décharge (11) est reliée, par l'intermédiaire d'au moins une conduite de décharge (12), avec un séparateur à cyclone (2) et de préférence la conduite de décharge (12) comprend un étranglement dynamique à gaz, plus particulièrement une vanne Tesla.

11. Dispositif selon l'une des revendications 1 à 10, **caractérisé en ce que**, à une deuxième extrémité axiale du boîtier (3) est disposé un collecteur (15) ainsi qu'un dispositif de coulée (16) pour des produits de réaction en fusion, dans lequel, de préférence, le boîtier (3) peut être chauffé électriquement au niveau du dispositif de coulée (16).

12. Dispositif selon la revendication 1, **caractérisé en ce que** l'enveloppe (21) est constituée, au moins au niveau de l'élargissement (24), d'un tube métallique (29) traversé par un produit de refroidissement, qui est enroulé sous la forme de spires (30) s'appuyant les unes contre les autres, vers l'élargissement (24), dans lequel, de préférence, les parties entre les spires (30) sont remplies ou lissées avec le métal constituant le tube métallique (29) et dans lequel, de préférence, le tube métallique (29) présente une section transversale rectangulaire, de préférence une section transversale carrée.

13. Procédé de traitement de particules solides contaminées chimiquement, comme des poussières de combustion, des poussières de ponçage, des poussières d'aciérie, des boues d'épuration, des farines animales, une fraction légère de broyeur, de la ferraille de batterie et autres, avec un dispositif selon l'une des revendications 1 à 12.

14. Procédé selon la revendication 13, dans lequel le flux de gaz est constitué d'un mélange d'air et d'oxygène pur, dans lequel, de préférence, un flux de gaz est injecté dans la chambre de combustion avec une vitesse d'écoulement de gaz supérieure à la vitesse d'allumage des particules solides, de préférence avec une vitesse d'écoulement de gaz qui représente au moins le double de la vitesse d'allumage et dans lequel, de préférence, le flux de gaz est injecté dans la chambre de combustion au niveau d'une buse convergent de la lance ou au niveau d'un rétrécissement d'une buse de Laval avec une vitesse d'écoulement de gaz supérieure à la vitesse du son du gaz injecté.

15. Procédé selon la revendication 13 ou 14, dans lequel le réservoir (7) est traversé, à travers un fond (18) délimitant le réservoir (7) vers le bas, par un milieu de fluidisation pour les particules solides, plus particulièrement de l'air, de l'oxygène, de la vapeur d'eau, CO₂, H₂/CO, Cl₂, NH₃, du phosgène, des hydrocarbures gazeux et/ou N₂, dans lequel, de préférence, dans le réservoir (7), est introduit, par l'intermédiaire d'au moins une conduite de raccordement (20, 20') pour le milieu de fluidisation pour les particules solides, plus particulièrement de l'air, de l'oxygène, de la vapeur d'eau, CO₂, H₂/CO, Cl₂, NH₃, du phosgène, des hydrocarbures gazeux et/ou N₂, et/ou des additifs gazeux, liquides et/ou solides, plus particulièrement Cl₂, COCl₂, PVC, NaCl, CaCl₂, H₂O sont introduits.

16. Procédé selon l'une des revendications 13 à 15, dans lequel les produits de réaction gazeux et/ou solides sont extraits et les produits de réaction solides sont séparés des produits de réaction gazeux par un séparateur à cyclone (2) et de préférence les produits de réaction solides sont soumis à un traitement métallurgique pour métaux non ferreux et de préférence les produits de réaction gazeux sont amenés vers un refroidissement en contact avec du bois et sont mis en réaction et les particules de charbon de bois et/ou de cendres de bois, chargées de produits de réaction qui y adhèrent, ainsi formées sont soumises à un traitement métallurgique pour métaux non ferreux.
